# EUROPEAN PATENT APPLICATION

(11) **EP 4 310 003 A2**
(43) Date of publication of application: **24.01.2024**
(21) Application number: 23214343.8
(22) Date of filing: 28.03.2022
(51) Int. Cl.: B64C 29/00

(54) **PROPULSION ASSEMBLY OF AN AERIAL VEHICLE, METHOD OF CONTROLLING AN ORIENTATION AND/OR POSITION OF A PROPULSION UNIT OF AN AERIAL VEHICLE, AND AERIAL VEHICLE**

(62) Divisional of application: 22164794.4
(71) Applicant: Lilium eAircraft GmbH, 82234 Wessling (DE)
(72) Inventor: Vermeiren, Sebantien, 82234 Wessling (DE)
(74) Representative: Grünecker Patent- und Rechtsanwälte PartG mbB

(57) **Abstract**

Method of controlling an orientation and/or position of a propulsion unit (2) of an aerial vehicle, wherein the propulsion unit (2) is configured to generate a thrust force and/or a lift force and is attached in a movable manner to a mounting portion, wherein the orientation and/or the position of the propulsion unit (2) with respect to the mounting portion is controlled based on the thrust force (F) being the manipulated variable in order to increase flight safety.

## Description

The present invention relates to a method of controlling an orientation and/or position of a propulsion unit of an aerial vehicle.

DE102015207445 A1 shows first and second lift generating bodies of a wing which are arranged in series along a flow direction of the wing, wherein the second lift generating body is pivotally arranged with respect to the first lift generating body. Further, the second lift generating body has a jet engine arranged thereon. That is, the jet engine is pivotally provided with respect to the first lift generating body.

To pivot the jet engine with respect to the first lift generating body, servo actuators are used by which a position and/or orientation of the jet engine can be controlled. That is, the actuator provides a load to drive the jet engine to the desired position and/or orientation.

However, when such actuators are used for controlling the position and/or orientation of the jet engine a problem arises when the actuator based control or a mechanical transmission does not work properly. In particular, the jet engine might freely move along a certain degree of freedom thereby endangering stability of an aerial vehicle. In flight, aerodynamic loads as well as mass loads and structural loads interact with each other and thus can enter into a destructive resonance regime which may result in fluttering or aero-elastic behaviors. Hence, uncontrolled movement of a movable jet engine is a serious risk for a safe flight.

Therefore, it is an object of the present application to improve flight safety and stability of an aerial vehicle.

Said object is achieved by a method of controlling an orientation and/or position of a propulsion unit of an aerial vehicle according to claim 1.

According to a first aspect of the present disclosure, a propulsion assembly of an aerial vehicle is provided, wherein the propulsion assembly comprises: at least one propulsion unit configured to generate a thrust force and/or lift force, and configured to be mounted to a mounting portion of the aerial vehicle in a movable manner about at least one degree of freedom; and at least one servo actuator device configured to control, in an operational state of the propulsion assembly, at least one of a position and an orientation of the at least one propulsion unit with respect to the mounting portion about the at least one degree of freedom by providing an actuator load for changing a direction or point of attack of the thrust force. The propulsion assembly further comprises at least one load limiting device that is configured to prevent transmission of an excessive load part of a load applied to the propulsion assembly and exceeding a predetermined value by the excessive load part in at least part of a load transmission path among the mounting portion and the at least one propulsion unit via at least part of the at least one servo actuator device.

According to this aspect, the servo actuator device is provided to control at least one of a position and an orientation of the at least one propulsion unit with respect to the mounting portion which is securable to a structural part of the aerial vehicle regarding the at least one degree of freedom. By means of the load limiting device, the servo actuator device can be reliably prevented from being damaged. Hence, a loss of control by means of the servo actuator device at least due to an over load such as an over torque can be reliably prevented. In particular, the load limiting device may be arranged such that the excessive load part is not transmitted to at least part of the at least one servo actuator device. Hence, reliable control of the position and/or orientation of the at least one propulsion unit can be secured and a safe and stable flight can be secured. The arrangement of the load limiting device is not particularly limited. Thereby, flexibility in the arrangement of the load limiting device can be provided.

According to another aspect, the propulsion unit may be mounted to the mounting portion to be at least rotatable thereto around at least one axis.

This enables thrust vectoring, that is, the orientation of the thrust force can be controlled in order to provide an aerial vehicle with high manoeuvrability. Also, the at least one rotational degree of freedom requires the servo actuator device to provide relatively high actuator loads in order to control the position and/or orientation of the at least one propulsion unit with respect to the mounting portion. On the other hand, without the load limiting device relatively high torques caused, for example, by bird strike, can be transmitted to the servo actuator device. Such excessive loads can be prevented from being transmitted to the servo actuator device by means of the load limiting device. In this regard, the actuator load provides a torque to rotate the at least one propulsion unit around the at least one axis.

Additionally or alternatively, the servo actuator device may comprises a rotary machine. Thus, the actuator load can be provided in a compact manner. Further, a rotary machine enables simple transmission of a torque for a propulsion unit mounted in a rotatable manner to the mounting portion.

Preferably, the at least one rotational axis may be an axis parallel to a horizontal direction, even more preferably, parallel to a transversal axis of the aerial vehicle in a case being arranged upright on the ground or during cruise. Thereby, the thrust can be used to generate lift, too. In addition, gravitation forces can cause additional torques to be counteracted by the at least one servo actuator device.

According to still another aspect, the at least one load limiting device may be configured to prevent transmission of the excessive load part of a load applied corresponding to the at least one degree of freedom, preferably, the at least one load limiting device is configured to allow relative movement of at least part of the at least one propulsion unit with respect to a degree of freedom regarding an axis parallel to the axis of the at least one degree of freedom, more preferably the at least one load limiting device is configured to allow movement of the at least one propulsion unit with respect to the mounting portion about the at least one degree of freedom upon the load exceeding the predetermined value.

That is, upon the excessive load, the load limiting device may be configured to prevent transmission of the excessive load part of a load which would cause movement of the at least one propulsion unit about the at least one degree of freedom if the at least one degree of freedom were unlocked and therefore could damage the servo actuator device since said excessive load may be transmitted via a load transmission path via which the actuator load is transmitted . In particular, the excessive load part of a load acting corresponding to the actuator load can be prevented from being transmitted. Therefore, the control about the at least one degree of freedom can be secured.

If the load limiting device is configured to allow relative movement of at least part of the at least one propulsion unit with respect to a degree of freedom regarding an axis parallel to the axis of the at least one degree of freedom, after receiving the excessive load part control can be easily reassumed by the servo actuator device. In other words, the load limiting device is configured to allow movement such that, after the movement due to the load limiting device has terminated, the actuator load can control this said movement. If the at least one load limiting device is configured to allow movement of the at least one propulsion unit with respect to the mounting portion about the at least one degree of freedom upon the load exceeding the predetermined value, the propulsion unit can move as an integral unit with respect to the degree of freedom and hence afterwards control can even more reliably resumed.

According to a further aspect, the load limiting device may be arranged within said load transmission path. That is, in order to provide the actuator load from the servo actuator device to the at least one propulsion unit, a load transmission path among the mounting portion and the at least one propulsion unit via the servo actuator device is provided via which also the excessive load part might be transmitted to the servo actuator device. According to this aspect, transmission of an excessive load part to the servo actuator device can be reliably suppressed.

Preferably, the at least one load limiting device is to be arranged in a part of the load transmission path which is located upstream of the propulsion unit considering the operational state, more preferably, in a mounting portion coupled part configured to transmit an actuator counter load among the mounting portion and the servo actuator device.

Thus, it can be ensured that the at least one propulsion unit moves as one unit if the excessive load part acts. In particular, the load limiting device may be arranged in a part of the load transmission path formed by at least part of the at least one servo actuator device. The at least one propulsion unit is susceptible to being hit by foreign objects such as birds, thereby causing external over loads. An excessive load part of these external loads can be reliably prevented from causing excessive reaction loads in parts of the servo actuator device by means of the load limiting device configured this way. Movable parts such as shafts or gears of the servo actuator device are endangered to be damaged, for example, cracking might occur, under excessive loads. Excessive reaction loads can be reliably prevented from being occurring in the servo actuator device by means of the load limiting device whereby, in particular, movable parts of the servo actuator device can be protected as the load exceeds the predetermined value. In addition, when the external load is removed, the at least one propulsion unit can be easily controlled again by the servo actuator load since the propulsion unit is controlled by the actuator load..

The actuator load entails an actuator counter load to be transmitted towards the mounting portion by the mounting portion coupled part of the load transmission path. The mounting portion coupled part can comprise a relatively fixed portion during the operational state. Therefore, all the movable parts of the servo actuator device during the operational state may move freely or integrally regarding the at least one degree of freedom and the servo actuator device can be made compact. That is, the propulsion unit itself can be moved with the same internal arrangement as before the external load has acted.

It is preferable that the at least one load limiting device is configured to prevent transmission of the excessive load part at least from the at least one propulsion unit towards the at least one servo actuator device and/or the mounting portion.

This also allows to spare the servo actuator device reliably.

Preferably, the at least one load limiting device is configured to prevent transmission of the excessive load part at least in a state in which a load lower than the predetermined value can be transmitted among the mounting portion and the at least one propulsion unit via at least part of the servo actuator device, that is in the load transmission path. Such state may be, for example, the operational state.

In this case, a load would be transmitted towards the at least one servo actuator device and the mounting portion and excessive reaction loads might arise in the load transmission path, in particular, in the servo actuator device causing damage to it due to deformation. By the load limiting device, such damage can be prevented.

According to still another aspect, in the at least one load limiting device the predetermined value may be set by a friction force.

Thereby, it is possible to set the predetermined value in an easy manner. In particular, the friction force can be easily set based on contact surface properties of contacting elements and a normal force. Preferably, the load limiting device comprises a biasing member for setting the normal force between the contacting elements. In the overload case, the excessive load part cannot be transmitted by the load limiting device, and slipping may occur.

According to still another aspect, the load limiting device may be configured to prevent load transmission by means of relative movement, in particular, comprises at least two relatively moving elements, preferably rotating elements, preferably configured to rotate coaxially with each other, wherein, even more preferably, one rotating element is at least partially located inside the other rotating element.

Thereby, an excessive load can be prevented from being transmitted by relative rotation between the at least two rotating elements. In addition, the arrangement can be made compact in an axial direction. In particular, the two rotating elements may be arranged such that the inner element makes, preferably direct, contact on its outer peripheral, preferably circumferential, surface with an inner peripheral, preferably circumferential, surface of the outer element. Thereby, the configuration can be made further compact. The relative movement may be enabled on the peripheral surfaces. The inner element and outer element may overlap in the radial direction. Also, the inner and outer element may be connected via a press fit. Thus, the predetermined value can be determined by the friction force due to the press fit. In case of application of the excessive load, the elements may slip relative to each other to prevent transmission of the excessive load. It is further preferably that the inner and outer element overlap with respective axial end portions thereof. Thereby, the load to be transmitted can be transmitted to respective axial distal portions away from the respective overlapping portion.

Alternatively or in addition, the load limiting device may comprise at least two rotating elements arranged side by side in an axial direction.

Also, thereby, an excessive load can be prevented from being transmitted by relative rotation between the at least two rotating elements and the structure can be made compact. These two rotating elements may be pressed each other in the axial direction.

The at least two relatively moving elements may be contacting elements, preferably directly contacting each other. Hence, a load may be transmitted at the contact portion.

Preferably, the two relatively moving elements are arranged coaxially on a rotational axis, preferably an axis, around which the at least one propulsion unit is rotatable with respect to the mounting portion. This is in particular advantageous, if the at least one propulsion unit is rotatably attached with respect to the mounting portion. By the coaxial arrangement, the structure can be made compact.

According to still another aspect, the at least one servo actuator device and the load limiting device are configured to allow relative movement about parallel axes. Thereby, the configuration can further be made compact.

Additionally or alternatively, at least one of an input portion and an output portion of the servo actuator device is arranged coaxially to the load limiting device. Also, thereby, the configuration can be made compact. According to still another aspect, the mounting portion may be at least part of a lift generation object, preferably a wing unit or a canard unit, and/or the at least one propulsion unit can comprise a turboshaft engine or a jet engine.

The lift generation object can dispose sufficient area and stiffness suitable for attachment. In addition, relatively high loads can be generated by either of the lift generation object and the turboshaft engine or jet engine. Hence, the load limiting device is particularly advantageous in this arrangement.

According to the present invention, a method of controlling an orientation and/or position of a propulsion unit of an aerial vehicle is provided, wherein the propulsion unit is configured to generate a thrust force and/or a lift force and is attached in a movable manner to a mounting portion, wherein the orientation and/or the position of the propulsion unit with respect to the mounting portion is controlled based on the thrust force being the manipulated variable.

According to this aspect, a servo actuator device is not necessary to control the position and/or orientation of the propulsion unit. Hence, even in a case where a servo actuator device is not provided or has a malfunction such as failure, the aerial vehicle can be controlled easily, and a safe and stable flight can be secured.

It is preferable that the propulsion unit is controlled to a fixed orientation and/or position.

Even if the fixed position and/or orientation during flight is a disturbance to the flight state, the disturbance is well predictable and adjustable, for example, by other propulsion units. The propulsion unit can be prevented from carrying out oscillating movements. The prevention of such oscillating movements increases flight stability.

Preferably, a stop is provided to define a fixed position and/or orientation of the propulsion unit with respect to the mounting portion, and, even more preferably, the thrust is manipulated such that propulsion unit contacts the stop.

According thereto, the position and/or orientation can be easily controlled. That is the thrust force can be adjusted such that the propulsion unit abuts on the stop, while the thrust force can be adjusted in a certain range to cause the propulsion unit to abut on the stop.

In this regard, the stop may be a mechanical stop, in particular, an abutment portion provided to connect the propulsion unit with the mounting portion directly or indirectly. The propulsion unit may abut on this stop. Thereby, the stop is preferably a mechanical stop, which prevents further movement of the propulsion unit with respect to the mounting portion by its rigidity.

According to still another aspect, the thrust force may be manipulated such that the position and/or orientation of the propulsion unit is controlled to be a position and/or orientation at which the propulsion unit is fixable by other means than the thrust force, and
preferably the thrust force is reduced, more preferably entirely removed, after the position and/or orientation has been fixed,

in particular preferably, an engaging mechanism is provided which fixes the position and/or orientation by engagement.

Therefore, the thrust force can be reduced after the position and/or orientation of the propulsion unit has been controlled to the certain position. Thereby, power consumption can be reduced. By means of an engaging mechanism, the position and/or orientation of the propulsion unit can be easily secured.

The engaging mechanism may comprise at least two engaging members, preferably, hook members. One of them may be coupled directly or indirectly, integrally or movable with respect to at least one degree of freedom to the mounting portion, and the other one may be coupled integrally or movable with respect to at least one degree of freedom to the propulsion unit.

Thus, the engaging members may prevent relative movement of the propulsion unit with respect to the mounting portion by form lock.

Preferably, at least one of the engaging members is at least movable with respect to the respective coupled entity or has elasticity. Thereby, engagement of the engaging members by means of the thrust force is facilitated.

Preferably, the engaging mechanism is configured to maintain the fixed position of the propulsion unit by a biasing force. For this purpose, an elastically deformed engaging member may not be totally restored after deformation for engagement. Thereby, the fixed position and/or orientation can be more reliably fixed.

According to still another aspect, a servo actuator device may be provided, which under normal operation is manipulated to control the position and/or orientation of the propulsion unit, preferably the propulsion assembly of any of the aspects specified above is provided, and the control method, as specified above, is performed upon detecting a malfunction in the control based on the servo actuator device.

According to this aspect, under a normal operation, the position and/or orientation of the propulsion unit can be controlled by means of an actuator load. Hence, the thrust force can be adjusted only in view of the flight requirements. However, even in the case the control by the servo actuator device does not work appropriately, for example, due to failure of the servo actuator device, a safe flight can be ensured.

If the attachment structure as specified above and comprising the actuator device is provided, the actuator device can be reliably prevented from malfunctioning but even if it does not work properly, a secure flight can be ensured.

According to still another aspect, the servo actuator device is decoupled, preferably by a clutch, from the propulsion unit upon detecting a malfunction in the control based on the servo actuator device.

According thereto, it is possible to reduce the influence of the servo actuator device on the control based on the thrust force. In particular, the number of parts, and hence the inertia mass to be controlled by the thrust force can be reduced. It is advantageous if an adjustable load limiting device as specified above is provided. For example, the load limiting device can be set such that the predetermined value equals zero in part of the transmission path between the servo actuator device and the propulsion unit. For this purpose, for example, the biasing member can be adjusted in order not to provide a biasing force. In this regard, the load limiting device is preferably arranged in a propulsion unit coupled part of the load transmission path, which transmits the actuator load among the servo actuator device and the propulsion unit

According to still another aspect, the thrust force is manipulated such that the position and/or posture of the propulsion unit is controlled to be a position and/or posture at which a suction side of the propulsion unit is located at least partially, preferably entirely, above an upper surface of the mounting portion.

Thereby, it is possible to generate a lift force since a relatively low pressure can be provided on the upper surface of the mounting portion forcing the mounting portion upward. Hence, flight safety can be enhanced accordingly. Also, as the lift generation can be supported by the propulsion unit, it is possible the lower the minimum velocity of the aerial vehicle.

According to still another aspect, also a propulsion assembly for the method as specified above is provided, which comprises the propulsion unit configured to be mounted to the mounting portion and any of the structural features as they have been specified for the control method.

Hence, a propulsion assembly providing flight stability and flight safety can be provided.

The present invention also considers an aerial vehicle comprising any of the aforementioned propulsion assemblies. The aerial vehicle is preferably a vertical-take-off-and-landing (VTOL) aerial vehicle. In this type of aerial vehicle, the propulsion unit is pivotable around a horizontal axis, preferably, a transversal axis, of the aerial vehicle, to enable thrust vectoring. To carry out the pivotable movement, the servo actuator device may be provided.

Another aspect of the present invention is also directed to a programme that, when running on a computer provided to a propulsion assembly or aerial vehicle, performs the above specified control method.

Another aspect of the present invention is directed to a computer readable storage medium or a control device having the aforementioned programme stored thereon.

This also enables a safe and stable flight.

For a thorough understanding of the above aspects, the following embodiments will be explained in detail making reference to the appended drawings.
Fig. 1A shows a comparative example of a propulsion assembly; Fig. 1B shows an embodiment of a propulsion assembly according to the present invention.
Fig. 2 shows a propulsion assembly according to a further embodiment in a side view.
Fig. 3 shows a propulsion assembly according to a further embodiment in a side view.

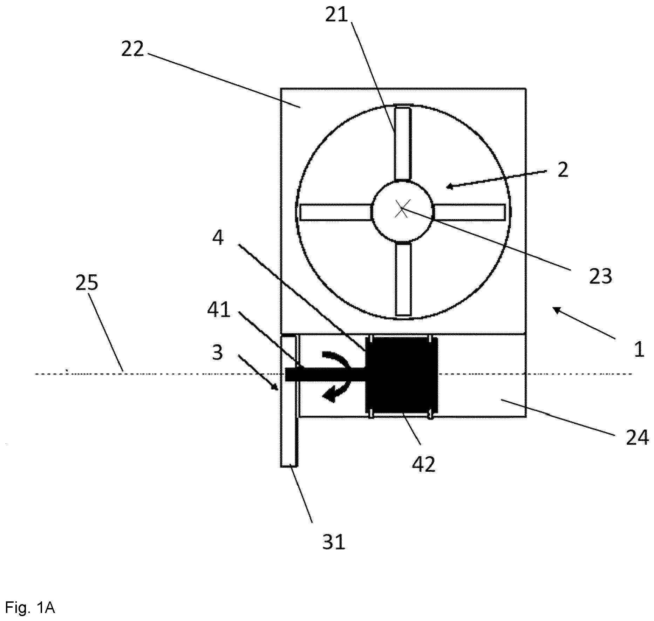

Fig. 1A shows a comparative example of a propulsion assembly 1. The propulsion assembly 1 is shown in a front view. It comprises a propulsion unit 2, and a servo actuator device 4. In addition, a wing unit 3 is shown, to which the propulsion unit 2 is mounted.

The propulsion unit 2 has an impeller 21 installed within a housing 22. In particular, the housing 22 extends substantially along a rotational axis 23 for a certain distance, thereby at least partially surrounding the impeller 21. The impeller 21 is configured to rotate around the rotation axis 23 in order to generate a thrust force. The impeller 21 is an example of a turboshaft engine. For example, the thrust force can be considered as a resulting thrust force resulting from the acceleration of the air. The thrust force is preferably aligned in parallel to the rotation axis 23 and coaxial thereto. It should be noted that the propulsion unit 2 here functions also as a lift generation object. That is, the housing 22 may have an aerodynamic effective portion thereby functioning as a flap. In particular, the outer peripheral surface of the housing 22 can have an aerodynamic effective profile.

The wing unit 3 is a lift generation object, comprises a lift generation body (not shown) such as an airfoil. It further comprises a bracket 31 to which the propulsion unit 2 is mounted on a rear portion of the wing unit. The bracket 31 is an example of a mounting portion according to the claims. The propulsion unit 2 is mounted to the wing unit 3 via the bracket 31. The thrust force is transmitted from the propulsion unit 2 to the wing unit 3 in order to control the wing unit 3. Please note that, even though only one bracket 31, is shown, a plurality of brackets 31 may be provided to mount the propulsion unit 2 to the wing unit 3, in particular, two respectively provided at opposite sides along an rotation axis 25.

The propulsion unit 2 further has an attachment section 24 by which the propulsion unit is preferably directly attached to the bracket 31 of the wing unit 3. The attachment section 24 extends substantially perpendicular to the rotation axis 23 of the impeller 21.

The propulsion unit 2, in particular, the attachment section 24 thereof is preferably attached to the bracket 31 in a rotatable manner. The rotation axis 25 of said rotational movement extends substantially perpendicular to the rotation axis 23 of the impeller 23 and passes through the attachment section 24. The rotational axis 25 extends in the left-right direction of the aerial vehicle. The attachment section 24 is a substantially hollow body being integrated in the propulsion unit 2 together with the housing 22 and extends along the rotation axis 25.

The attachment section 24 accommodates therein the servo actuator device 4. The servo actuator device 4 is, for example, a rotary machine such as an electric motor. The servo actuator device 4 is preferably arranged to be coaxial with the rotation axis 25. The servo actuator device 4 has a mounting portion coupled portion 41 which is coupled, preferably fixed, with respect to the mounting portion (the bracket 31) and a propulsion unit coupled portion 42 which is coupled, preferably fixed, with respect to the propulsion unit 2. The mounting portion coupled portion 41 is a shaft being coaxial to the rotation axis 25. The propulsion unit coupled portion 42 is a casing of the electric motor which functions as rotor and is configured to rotate around the shaft 41. The propulsion unit coupled portion 42 is an output portion of the servo actuator device. while the mounting portion coupled portion 41 corresponds to an input portion in an operational state when the actuator load is provided.

If the electric motor is driven by applying a voltage thereto, the casing 42 is moved relatively around the shaft 41. In other words, the casing 42 rotates with respect to the rotation axis 25. By this rotation, the propulsion unit 4 which is fixedly coupled to the casing 42 can be controlled to a certain rotational position, that is, an orientation with respect to the mounting portion 31. If the controlled position is reached, the rotational degree of freedom may be locked. For this purpose, for example, the attachment structure may comprise a brake device which may fix the mounting portion coupled portion 41, and the propulsion unit coupled portion 42 together. Hence, a relative movement between the propulsion unit coupled portion 42 and the mounting portion coupled portion 41 is no longer possible. The brake device is preferably installed in the servo actuator device 4 and preferably comprises at least part of the servo actuator device. For example, the shaft may be coupled to the casing 42 such that the rotational degree of freedom is locked. It should be noted that instead of a brake, the servo actuator device may be self-locking such that relative movement is allowed towards the output portion but not therefrom. It is also possible, that the rotational position may be controlled only. That is, an actuator load is continuously provided to counter the acting loads.

If the rotational degree of freedom is locked or controlled, a load transmission path from the mounting portion 31 of the wing unit 3 to the propulsion unit 2 via the servo actuator device 4 and vice versa is formed along which a torque around the rotation axis 25 can be transmitted. If an external load acts on the propulsion unit, for example, due to bird striking, a torque as an example of a load with respect to the rotation axis 25, that is a load corresponding to the degree of freedom of the propulsion unit 2 with respect to the mounting portion 3, might be caused which is transmitted towards and through at least part of the servo actuator device 4. This torque can cause reaction loads causing deformations and if the torque exceeds a certain value causing failure. The movable parts of the servo actuator device are particularly sensitive to external loads.

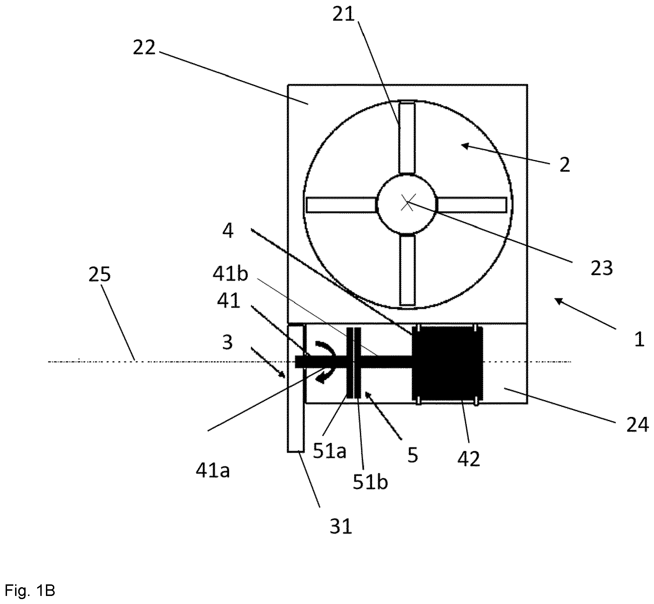

In order to take an excessive torque out of the transmission path, the configuration of Fig. 1B is provided.

The structure of the attachment structure 1 in Fig. 1B is substantially the same as the one in Fig. 1A.

The propulsion assembly 1 of Fig. 1B is provided with a load limiting device 5. The load limiting device is arranged within the shaft 41 which is a split shaft in Fig. 1B having two shafts 41a and 41b separated along the axial direction of the shaft. In other words, the load limiting device 5 is arranged within the aforementioned load transmission path, in particular, in a part formed by the mounting portion coupled portion 41, that is in a mounting portion coupled part of the load transmission path. The mounting portion coupled part is an example of a part of the load transmission path configured to transmit an actuator counter load towards the mounting portion. That is, the actuator load is generated between the shaft 41 and the casing 42 wherein the actuator load is transmitted to the propulsion unit 2 and the counter load is transmitted towards the mounting portion 3.

The load limiting device comprises two rotating elements 51a and 51b which comprise friction plates, for example, and are coaxially arranged side by side along the axis 25. An actuator or biasing member may press the friction plates 51a and 51b together along the axial direction. The rotating elements 51a and 51b are each coupled at least with respect to a rotational degree of freedom, preferably integrally coupled to respective ends of the shafts 41a and 41b. The rotating elements are preferably arranged at least partially inside of the propulsion unit 2 or the mounting portion 31, in the present case in the attachment section 24.

The amount of the pressing force with which the rotating elements 51a and 51b are pressed together determines the maximum friction force between these elements along with the contact surface quality. Since the resulting friction force acts with a lever arm with respect to the axis 25 a counter torque acts with respect to the axis 25 when a torque is applied to the shaft 41 which allows the transmission of the applied torque between the shafts 41a and 41b. If the applied load exceeds a predetermined value, which is preferably larger than zero, even more preferably, larger than the maximum operational load being the maximum of a sum of operational loads such as the thrust force, centrifugal forces, drag forces, etc., the rotating elements 51a and 51b make relative movement to each other. Thereby, an excessive torque exceeding the predetermined value can be taken out from the system.

Effects and advantages of the aforementioned embodiment will now be described.

The propulsion assembly 1 comprises a propulsion unit 2 configured to generate a thrust force. If the propulsion unit 2 is orientated substantially vertically along a height axis of the aerial vehicle, the thrust force acts as a lift force. The propulsion assembly 1 further comprises the propulsion unit 2 mounted in a movable manner to the bracket 31, in the present case, a rotatable manner about at least one degree of freedom. Further, the electric motor 4 is provided as the servo actuator device configured to control orientation of the propulsion unit 2 with respect to the bracket 31 regarding the rotational degree of freedom around the axis 25 by providing an actuator load which is a torque in the present case. The servo actuator device 4 is configured such that it allows movement of the propulsion unit 2 about the degree of freedom with the thrust force being provided. Hence, a direction or a point of attack of the thrust force can be changed, preferably, continuously changed.

In an operational state, the servo actuator device 4 provides the actuator load to change the position and/or orientation of the propulsion unit 2 to a desired position. In this case, the actuator load has to be higher than the applied operational loads. It is to be noted that a desired position and/or orientation of the propulsion unit 2 may also be maintained by means of the servo actuator device. In this case, the servo actuator device is controlled to provide an actuator load to withstand the applied operational loads, that is the actuator load is equal to the operational loads.

The propulsion assembly 1 further comprises the load limiting device 5 that can prevent transmission of an excessive torque. The excessive torque is a torque being an increment between an overload and a torque predetermined by the load limiting device 5.

For example, if the brake device is activated, that is, the rotational degree of freedom is locked, a load transmission path is formed wherein the load (a torque) can be transmitted from the mounting portion 31 to the propulsion unit 2 via at least part of the servo actuator device 4, in particular part of the mounting portion coupled portion, the brake, and the propulsion unit coupled portion, and also vice versa.

The load limiting device 5 prevents transmission of an excessive torque in this load transmission path in both directions, independently from whether the propulsion unit 2 is the input side of the excessive torque or the mounting portion 31 is the input side. The load limiting device is arranged such that is prevents transmission of the excessive torque in a load transmission path among the servo actuator device 4 and the mounting portion 31, which is part of the aforementioned entire transmission path.

By means of the load limiting device 5, the servo actuator device 4 can be reliably prevented from being damaged. Hence, a loss of control by means of the servo actuator device 4 can be reliably prevented. In particular, the load limiting device 5 is arranged such that an excessive load is not transmitted from the mounting portion to at least part of the at least one servo actuator device 4 downstream of the load limiting device 5 considering the side of the mounting portion as input side where the overload is applied. Even if an excessive load is caused at the propulsion unit 2 due to bird strike, for example, that is the propulsion unit 2 being the input side regarding the excessive torque, said torque is reduced by the relative movement, such that reaction forces do not act excessively in parts of the servo actuator device. That is, the part upstream of the load limiting device 5 moves as an integral unit with respect to the mounting portion 31 when the propulsion unit 2 is the input side.

The propulsion unit 2 is attached to the mounting portion 31 to be rotatable thereto around the axis 25.

This enables thrust vectoring, that is, the orientation of the thrust force of the propulsion unit can be controlled in order to provide an aerial vehicle with high flexibility. Also, the at least one rotational degree of freedom requires the servo actuator device to provide relatively high actuator torques in order to control orientation of the propulsion unit 2 with respect to the mounting portion. On the other hand, without the load limiting device 5 relatively high torques caused, for example, by bird strike, can be transmitted to the servo actuator device 4 due to reaction forces. Such excessive loads can be prevented from being transmitted to the servo actuator device 4 by means of the load limiting device 5.

Also, the servo actuator device 4 is a rotary machine in the present case. Thereby, the torque to control the propulsion unit about the rotational degree of freedom can be easily provided. In addition, the servo actuator device 4 and the load limiting device each allow movement about the axis 25. It is to be noted that the actuator device 4 allows relative movement of the mounting portion coupled portion 41 and the propulsion unit coupled portion in the operational state, and the load limiting device allows relative movement of the rotating elements 51a and 51b in an overload state.

The rotational axis 25 is an axis parallel to a horizontal direction, preferably, parallel to a transversal axis of the aerial vehicle in a case being arranged upright on the ground or during cruise. Thereby, the thrust can be used to generate lift, too. In addition, gravitation forces can cause additional torques to be counteracted by the at least one servo actuator device 4.

The load limiting device 5 is configured to prevent transmission of the excessive load part of the load applied corresponding to the at least one degree of freedom of the propulsion unit 2. That is, in a state in which the at least one degree of freedom is unlocked, in particular if the brake device is not activated and an actuator load is not provided, the load would cause movement about the at least one degree of freedom. Considering a bird strike, a force into the drawing plane in Fig. 1B, that is a front-rear direction of the aerial vehicle might act along the axis 23. Thereby, a torque acting as indicated by the arrow in Fig. 1B is caused and would cause rotation of the propulsion unit 2 around the axis 25. The excessive load can be reduced by the load limiting device 5. Hence, in a state in which the at least one degree of freedom is locked, an excessive load part which would cause movement along the at least one degree of freedom when the degree of freedom is unlocked, for example, if the servo actuator device 4 or the brake are deactivated, can reliably be prevented from being transmitted when exceeding the predetermined value. Therefore, the control along the at least one degree of freedom can be secured.

The load limiting device 5 is further configured to allow relative movement of at least part of the propulsion unit with respect to a degree of freedom regarding an axis parallel to the axis of the rotational degree of freedom, in the present case around the same axis 25. As mentioned above, the propulsion unit 2 may move as an integral unit with respect to the rotational degree of freedom. That is, the load limiting device 5 is configured to allow movement of the at least one propulsion unit 2 with respect to the mounting portion 31 along the rotational degree of freedom upon the load exceeding the predetermined value. Therefore, control can be easily reassumed by the servo actuator device 4 as it also controls the propulsion unit 2 around a parallel axis.

Preferably, the at least one load limiting device 5 is configured to prevent transmission of the excessive load part in a part of the load transmission path which is located downstream of the propulsion unit 5 itself when the propulsion unit 2 is the input side regarding the excessive load part, that is a load is to be transmitted from the propulsion unit towards the servo actuator device 4 and/or the mounting portion. In particular, the load limiting device 5 is arranged upstream of the propulsion unit 2 and the propulsion unit coupled portion 42, respectively, when the propulsion unit 2 is the output side, that is in the operational state of the propulsion assembly 1. In particular, the load limiting device 5 is configured to prevent transmission of the excessive torque in the mounting portion coupled portion 41, which may be part of the mounting portion coupled part of the load transmission path which is relatively fixed at least regarding the at least one degree of freedom with respect to the mounting portion when the actuator load is provided. This part of the load transmission path corresponds to a part via which an actuator counter load can be transmitted towards the mounting portion.

Hence, when the external load is removed, the at least one propulsion unit 2 can be easily controlled again by the servo actuator load since the propulsion unit 2 is controlled with respect to the relatively fixed part. Therefore, all the movable parts of the servo actuator device may move integrally regarding the at least one degree of freedom, and the servo actuator device 4 can be made compact. That is, the propulsion unit 2 can be moved with the same internal arrangement as before the external load has acted. In particular, upon the overload, the propulsion unit 2 moves as one unit regarding the degree of freedom.

It is preferable that the at least one load limiting device is configured to prevent transmission of an excessive load part at least from the at least one propulsion unit towards the at least one servo actuator device and/or the mounting portion. Instead of the load limiting device 5 also a one-way clutch 5 may be provided, for example, which enables transmission of an excessive load part if the propulsion unit 2 is the output side regarding the excessive load part.

As mentioned above, the at least one load limiting device is configured to prevent transmission of the load exceeding the predetermined value at least in a state in which a load lower than the predetermined value can be transmitted, that is for example, if the brake device is activated, or the servo actuator device provides an actuator load counterweighing the operational forces. In the latter case, it is preferable that the predetermined value is lower than the maximum providable actuator load.

In any case, an external load would be transmitted towards the at least one servo actuator device 4 and excessively high reaction forces might arise in the servo actuator device 4 causing damage to it. By the load limiting device 5, such damage can be prevented.

In the at least one load limiting device 5, the predetermined value is set by a friction force which is preferably adjustable by means of an actuator or a biasing member such as a spring device.

Thereby, it is possible to set the predetermined value in an easy manner. In particular, the friction force can be easily set based on contact surface properties of contacting elements, and a normal force.

The load limiting device 5 comprises at least two rotating elements 51a and 51b, preferably configured to rotate coaxially with each other, which are arranged side by side in an axial direction of the rotational axis 25 around which the at least one propulsion unit 2 is rotatable with respect to the mounting portion 31.

Thereby, an excessive load can be prevented from being transmitted by relative rotation between the at least two rotating elements 51a and 51b, that is by slip. This is in particular advantageous, if the at least one propulsion unit 2 is rotatably attached with respect to the mounting portion. By the side-by-side arrangement, the structure can be made compact in a radial direction. The at least two rotating elements may be contacting elements, preferably directly contacting each other.

However, it is also possible to provide at least two rotating elements wherein one of them is located at least partially inside the other. For example, the one rotating element can be a hollow shaft contacting at an inner peripheral surface thereof the other rotating element. Preferably, these at least two elements have a press fit at their peripheral contact, whereby also a friction force is generated. Similar to the embodiment, the rotating elements may extend from the contacting portion, which corresponds to an overlapping portion, to separate from each other along the axial direction. Thereby, the torque can be transmitted easily from along the axial direction, such that a mounting space for the propulsion unit can be ensured. To this end, the rotating elements may overlap at respective axial end portions thereof. It should be noted that instead of a press fit, also a slip fit or an interference fit may be applied. The selection also depends on the temperature range passed by the aerial vehicle.

The input portion 41 of the servo actuator device and the output portion 42 are arranged coaxially with the load limiting device 5. This allows a very compact arrangement.

The mounting portion 31 is part of a lift generation object, namely the wing unit 3 while it may also be part of a canard unit, and/or the at least one propulsion unit 2 can comprise a turboshaft engine or a jet engine. The turboshaft engine is preferably an electrically driven turboshaft engine.

The lift generation object can dispose of sufficient area and stiffness suitable for attachment and is also suitable to support high loads due to its inertia which could cause reaction forces. In addition, relatively high loads are generated by either of the lift generation object and the turboshaft engine or jet engine. Hence, the load limiting device 5 is particularly advantageous in this arrangement. An electrically driven turboshaft engine is particularly advantageous in combination with an electrically driven actuator device.

It should be noted that the propulsion unit 2 is preferably an integrally moving unit except for the parts generating the thrust force at least in a state in which the actuator load is provided and/or thrust is generated and comprises the engine.

The load limiting device 5 is preferably of a non-destructive type.

In the above embodiment the propulsion assembly may further comprise a damping device provided in the load transmission path which is configured to damp the excessive load. Hence, excessive movement can be suppressed.

The arrangement of the load limiting device 5 is not particularly limited and it may be disposed in any part of the load transmission path among the mounting portion and the propulsion unit via at least part of the servo actuator device. For example, the load limiting device may be arranged between movable parts of the servo actuator device. For example, the servo actuator device may have a transmission comprising a plurality of gears. The load limiting device may be arranged within one of the gear stages, that is, in part of the load transmission path formed by the gear stages, for example, by press fit of a gear and the corresponding shaft. Also in this case, the load limiting device is configured to prevent transmission of the excessive load part in a load transmission path among the mounting portion and the propulsion unit via at least part of the servo actuator device. The load limiting device may further be arranged in the propulsion unit itself. However, then the propulsion unit may not move as an integral unit when the excessive load is not transmitted. The load limiting device may further be arranged in the mounting portion 31 itself. In this case, the invention refers to a propulsion assembly arrangement comprising the mounting portion. However, it is preferably, that the load limiting device is arranged downstream of the mounting portion considering the operational state, that is, the provision of an actuator load.

The load limiting device may further be configured to prevent transmission of an excessive load part of a load acting on the propulsion unit and/or the mounting portion such that it does not cause movement about the degree of freedom. For example, the load limiting device in the embodiment may allow axial movement along the axis 25, for example, by the aforementioned hollow shaft arrangement.

While preferably, the load limiting device is configured to allow relative movement about the corresponding degree of freedom as the at least one degree of freedom about an axis parallel to axis of movement of the propulsion unit, the load limiting device may be configured to prevent transmission of an excessive load part by a relative movement about another degree of freedom. For example, prevention of an excessive load corresponding to the at least one degree of freedom may also be achieved by allowing relative movement of at least part of the propulsion unit in the front-rear direction in the above embodiment. Also, the at least one degree of freedom need not be a rotational degree of freedom but maybe a translational degree of freedom wherein preferably a position of the propulsion unit is controlled by the servo actuator device.

Also, the servo actuator device may not comprise or be a rotary actuator device but a linear actuator device. In addition, the servo actuator device need not comprise or be an electric device, but may comprise or be a hydraulic or pneumatic device. For example, the servo actuator device may be a hydraulic or pneumatic cylinder, coupled to the propulsion unit, which in turn still can be rotatable with respect to the mounting portion. Then, the load limiting device may be a relief valve, for example. The servo actuator device may also comprise a mechanical linkage.

The propulsion unit may comprise a propeller instead of an impeller. In other words, the housing 22 need not be provided.

While, the mounting portion coupled portion is the shaft and the propulsion coupled portion the casing of the servo actuator device, this arrangement may also be reversed.

Preferably, the servo actuator device and/or the load limiting device are least partially, preferably entirely covered from the outside, for example, by the attachment section 24. Hence, the influence of an air stream can be reduced.

A brake device need not necessarily be provided.

While in the above embodiment, a position and/or orientation of the propulsion unit can reliably be controlled even if the propulsion unit fails since the servo actuator device can be prevented from being damaged and hence can accordingly maintain control of the propulsion unit, in view of a safe flight it is also desirable to maintain the propulsion unit controllable even if the control by the servo actuator device fails.

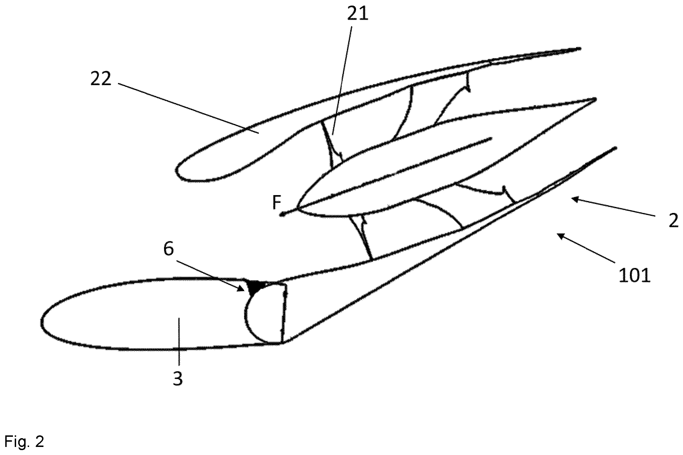

Fig. 2 shows a propulsion assembly 101 in a side view. The propulsion assembly 101 has generally the same elements as the propulsion assembly 1. Same elements are provided with the same reference signs while a detailed description of these elements is omitted in the following.

The propulsion assembly 101 also comprises a propulsion unit 2 which generates a thrust force F which is transmitted to a mounting portion of the wing unit 3. The propulsion unit 2 is movably attached to the mounting portion 3 at an attachment section which is part of the housing 22. As in the first embodiment, the mounting portion is at least part of a wing unit while the propulsion unit comprises a turboshaft engine, preferably.

The propulsion assembly 101 may but need not necessarily comprise a servo actuator device preferably provided as in the first embodiment.

Further, a control device can be provided in order to control at least a position and/or orientation of the propulsion unit 2 with respect to the mounting portion. A control method to be performed by the control device for controlling the position and/or orientation of the propulsion unit 2 will be described in the following.

During a normal operation, the control device may provide a signal to the servo actuator device to output an actuator load in order to control position and/or orientation of the propulsion unit 2 with respect to the mounting portion to move and/or maintain the propulsion unit 2 to/in a certain position and/or orientation. Also, the control device may control, for example, the brake device to maintain the position and/or orientation in a certain position and/or orientation.

In the normal operation, the manipulated variable may be the actuator load of the servo actuator device, while the disturbance variable comprises the operational loads including aerodynamic loads such as drag and the thrust force, for example.

The attachment structure 101 further comprises a plurality of sensors which can detect movement of the propulsion unit with respect to the portion or can detect a value of an actuator load, for example.

The output of the sensors is continuously monitored by the control device.

The control device may determine failure in the normal operation, that is, failure in the control by the servo actuator device if, for example, a movement frequency which may be a velocity of the propulsion unit about a certain degree of freedom exceeds a predetermined value, or if the actuator load is lower than a predetermined value when an actuator load is required.

If failure in the normal operation is determined, the control unit preferably decouples at least part of the servo actuator device and/or the brake device from the propulsion unit 2 regarding transmission of a load about the at least one degree of freedom. For this purpose, preferably the load limiting device according to the first embodiment can be used which acts as a clutch. In this case, the load limiting device of the first embodiment can be arranged in propulsion portion coupled part of the load transmission path, for example, in the propulsion unit coupling portion of the servo actuator device.

Then, the thrust force is manipulated in order to control the position and/or orientation of the propulsion unit with respect to the mounting portion. The thrust force may be manipulated either in view of its value and/or its direction, for example. For example, the rotation speed of the turboshaft engine may be varied for this purpose. As the thrust force which is represented by the arrow in Fig. 2 acts with a lever arm regarding the rotation axis around which the propulsion unit rotates, a torque acts which can rotate the propulsion unit around the rotation axis.

As can be seen from Fig. 2, the propulsion assembly 101 has a stop 6 which is preferably a mechanical stop provided to the wing unit 3. The stop is provided to a portion of the wing which is a portion secured to the mounting portion. The stop is an entity provided with the principal purpose of providing a stop for the propulsion unit and has no other principal function. The stop can be provided in an on/off manner such that it is only provided under abnormal operation. For example, the stop may be movable. The stop may also be provided in a protruding manner. The stop 6 shown in Fig. 2 is an abutment portion provided to connect the propulsion unit with the mounting portion directly or indirectly. The propulsion unit may abut on this stop 6 upon rotation about the rotational axis. The stop may be provided such that the propulsion unit abuts on it within an angle lower than 90° degrees, more preferably, lower than 45° with respect to the orientation during cruise flight, in particular, with respect to a camber line of the wing or an axial direction of the aerial vehicle.

If the propulsion unit 2 is controlled by the thrust force, the thrust force is adjusted such that the propulsion unit abuts with a part on the stop 6. The stop 6 defines a certain position and/or orientation. By adjusting the thrust force, the propulsion unit can be controlled to a fixed position and/or orientation during the entire flight which is a position and/or orientation corresponding to the position and/or orientation defined by the stop.

In addition, as can be seen from Fig. 2, the propulsion unit 2 is controlled to such an orientation that it extends backward and upward from the mounting portion. Thereby, a suction side of the propulsion unit, in particular, the engine, that is, an input side of the air stream, is located over an upper surface of the wing unit 3, for example, an upper side of an airfoil in an up-and-down direction considering the aerial vehicle in an upright state. The suction side like part of the propulsion unit 2 is overlapping the wing unit 3 in the up-and-down direction.

Preferably, the thrust force is adjusted such that the propulsion unit abuts on the stop with a biasing force.

In the embodiment of Fig. 2 the thrust force need to be maintained in order to control the propulsion unit 2 to the fixed position/orientation as drag and gravitation would turn the propulsion unit 2 out of position and/or orientation.

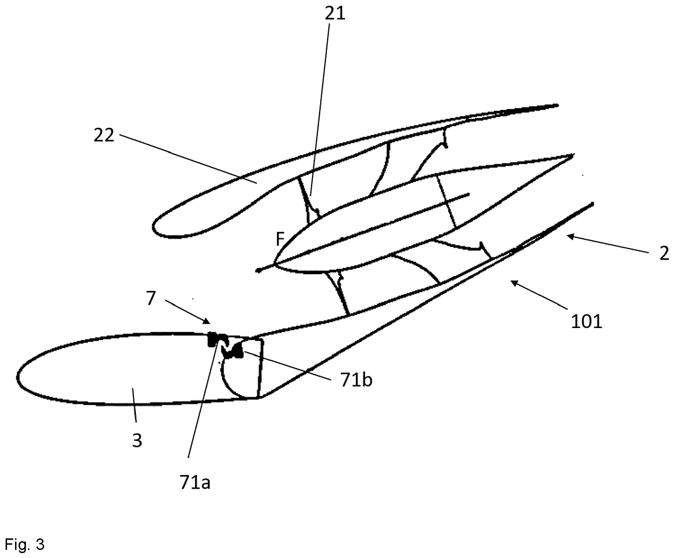

Fig. 3 shows another embodiment, which is substantially the same as the second embodiment but wherein the thrust force can be removed after the propulsion unit has been controlled to the fixed position. For this purpose, the propulsion assembly has an engaging mechanism 7 which locks the at least one rotational degree of freedom and thereby fixes the position and/or orientation of the propulsion unit 2 with respect to the mounting portion 3.

The engaging mechanism 7 comprises in the present case two engaging members, which are hook members 71a and 71b, one of which is coupled directly or indirectly, integrally or movable with respect to at least one degree of freedom to the mounting portion of the wing unit 3, and the other one is coupled integrally or movable with respect to at least one degree of freedom to the propulsion unit. Preferably, at least one of the engaging members 71a and 71b is at least movable with respect to the respective coupled entity or has elasticity in order to enable engaging of the engaging members by means of the thrust force. At least one engaging member may also be coupled via an elastic member to the respectively coupled portion. Preferably, the engaging mechanism is configured to maintain the fixed position of the propulsion unit by a biasing force. For this purpose, the elastically deformed engaging member may not be totally restored after deformation for engagement. The hook member 71b is coupled to the lower portion of the housing 22, for example, as in the present case.

In the embodiment according to Fig. 3, the thrust force can be turned off after engagement has been completed.

Effects and advantages of the second and third embodiment will be described in the following.

Provided is a method of controlling an orientation and/or position of a propulsion unit 2 of an aerial vehicle, wherein the propulsion unit 2 is configured to generate a thrust force F which can also act as a lift force if the propulsion unit 2 is orientated along the up-and-down-direction, and is attached in a movable manner to mounting portion, wherein the orientation and/or the position of the propulsion unit 3 with respect to the mounting portion is controlled based on the thrust force F being the manipulated variable.

Hence, a servo actuator device is not necessary to control the position and/or orientation of the propulsion unit. Hence, even in a case where a servo actuator device is not provided or has a malfunction such as failure, the aerial vehicle can be controlled easily, and a safe and stable flight can be secured.

In the embodiments of Fig. 2 and 3 the propulsion unit 2 is controlled to a fixed position.

Even if the fixed position during flight is a disturbance to the flight state, the disturbance is well predictable and adjustable, for example, by other propulsion units. The propulsion unit can be prevented from carrying out oscillating movements, which increases flight stability.

In Fig. 2, a stop 6 is provided to define the fixed position and/or orientation of the propulsion unit 2 with respect to the mounting portion, and the thrust is manipulated such that propulsion unit contacts the stop.

According thereto, the position and/or orientation can be easily controlled. That is the thrust force F can be adjusted such that the propulsion unit 2 abuts on the stop 6, while the thrust force F can be adjusted in a certain range to cause the propulsion unit to abut on the stop.

In Fig. 3, the thrust force may be manipulated such that the position and/or orientation of the propulsion unit 2 is controlled to be a position and/or orientation at which the propulsion unit is fixable by other means than the thrust force (the orientation shown in Fig. 3). In particular, the engaging mechanism 7 is provided which allows fixing the relative position/orientation of the propulsion unit with respect to the mounting portion. In the control method, the thrust force is removed, after the position and/or orientation has been fixed by the engaging mechanism.

Therefore, the thrust force can be reduced after the position and/or orientation of the propulsion unit has been controlled to the certain position. Thereby, power consumption can be reduced. By means of an engaging mechanism, the position and/or orientation of the propulsion unit can be easily secured.

Similar to the first embodiment, a servo actuator device may be provided which under normal operation is manipulated to control the position and/or orientation of the propulsion unit by an actuator load. For this purpose, the propulsion assembly 1 of the first embodiment may be provided to be included in the propulsion assembly 101, and the control method is performed upon detecting a malfunction (failure) in the control based on the servo actuator device.

According to this aspect, under a normal operation, the position and/or orientation of the propulsion unit 2 can be controlled by means of the actuator load. Hence, the thrust force F can be adjusted only in view of the flight requirements. But even in case the control by the servo actuator device does not work appropriately, for example, due to failure of the servo actuator device, a safe flight can be ensured.

If the propulsion assembly of the first embodiment having the load limiting device and the servo actuator device is provided, the actuator device can additionally be reliably prevented from malfunctioning in view of excessive loads but even if it does not work properly, a secure flight can be ensured. If the control based on the thrust force cannot be performed, for example, as a bird strike damaged the propulsion unit and consequently thrust cannot be generated sufficiently, the position and/or orientation of the propulsion unit may be controlled via the servo actuator device, in a preferred embodiment.

As mentioned above, the servo actuator device may be decoupled, preferably by a clutch which can be the load limiting device, from the propulsion unit 2 upon detecting a malfunction in the control under normal condition.

According thereto, it is possible to reduce the influence of the servo actuator device on the control based on the thrust force. In particular, the number of parts, specifically rotating parts, to be moved during the control based on the thrust force can be reduced. The load limiting device can be set such that the predetermined value equals zero in a transmission path between the servo actuator device and the propulsion unit. For this purpose, for example, the biasing member can be adjusted in order not to provide a biasing force.

In the second and third embodiment, the thrust force F is manipulated such that the position and/or posture of the propulsion unit is controlled to be a position and/or orientation at which a suction side of the propulsion unit 2 is located at least partially, preferably entirely, above an upper surface of the mounting portion or the entire wing unit 3.

Thereby, it is possible to generate a lift force since a relatively low pressure can be provided on the upper surface of the mounting portion forcing the mounting portion upward. Hence, flight safety can be enhanced accordingly. Also, as the lift generation can be supported by the propulsion unit, it is possible the lower the minimum velocity of the aerial vehicle.

The configuration of the engaging mechanism is not particularly limited. For example, a lug-hook combination can be used for the engaging members. Also, the engaging mechanism may be movable after engagement to control the propulsion unit to another orientation and/or position.

Each of the aforementioned can be performed by the control device. The control device may be a central board computer of the aerial vehicle governing the components such as the propulsion unit, the servo actuator device, and the load limiting device. However, also a network computer assigned to the propulsion assembly may act as the control device.

The aerial vehicle, the above propulsion assemblies or the control methods can have preferably a plurality of propulsion units each of which preferably mounted to the same mounting portion wherein more preferably for each propulsion unit a load limiting device and the above control methods are provided.

The load limiting device of the above embodiments may also be a bypass load transmission path which bypasses the servo actuator device. That is, for example, an engaging mechanism may function as a load limiting device regarding the load transmission path passing through the servo actuator device. For this purpose, a plurality of engaging mechanisms can be provided corresponding to a plurality of positons/orientations of the propulsion unit. Also, in this case an excessive load part is not transmitted in a load transmission path among the at least one propulsion unit, the mounting portion via at least part of the servo actuator device.

Any features of the aforementioned embodiments may be freely combined with each other and several modifications can be made as long as falling within the scope as defined by the appended claims.

Unless otherwise taught, in the present disclosure the expression "at least" also comprises the respective entirety.

## Claims

1. Method of controlling an orientation and/or position of a propulsion unit (2) of an aerial vehicle,
wherein the propulsion unit (2) is configured to generate a thrust force and/or a lift force and is attached in a movable manner to a mounting portion,
wherein the orientation and/or the position of the propulsion unit (2) with respect to the mounting portion is controlled based on the thrust force (F) being the manipulated variable.

2. The method according to claim 1, wherein the propulsion unit (2) is controlled to a fixed orientation and/or position.

3. The method according to claim 2, wherein, a stop (6) is provided to define a fixed position and/or orientation of the propulsion unit (2) with respect to the mounting portion,

4. The method according to claim 3, wherein the thrust force is manipulated such that the propulsion unit (2) contacts the stop (6).

5. The method according to any of the preceding claims, wherein the thrust force (F) is manipulated such that the position and/or orientation of the propulsion unit (2) is controlled to be a position and/or orientation at which the propulsion unit is fixable by other means (7) than the thrust force.

6. The method according to claim 5, wherein the thrust force (F) is reduced after the position and/or orientation has been fixed.

7. The method according to claim 5 or 6, wherein an engaging mechanism (7) is provided which fixes the position and/or orientation by engagement.

8. The method according to claim 7, wherein the engaging mechanism comprises two engaging members, wherein at least one of the two engaging members has elasticity.

9. The method according to claim 7 or 8, wherein the engaging mechanism is configured to maintain the fixed position of the propulsion unit (2) by a biasing force.

10. The method according to any of preceding claims, wherein a servo actuator device (4) is provided which under normal operation is manipulated to control the position and/or orientation of the propulsion unit, and the control according to any of the preceding claims is performed upon detecting a malfunction in the control under normal operation.

11. The method according to claim 10, wherein a propulsion assembly (1) is provided, wherein the propulsion assembly (1) comprises: at least one propulsion unit (2) configured to generate a thrust force and/or lift force, and configured to be mounted to a mounting portion of the aerial vehicle in a movable manner about at least one degree of freedom; and the servo actuator device configured to control, in an operational state of the propulsion assembly, at least one of the position and the orientation of the at least one propulsion unit (2) with respect to the mounting portion about the at least one degree of freedom by providing an actuator load for changing a direction or point of attack of the thrust force, wherein the propulsion assembly further comprises at least one load limiting device that is configured to prevent transmission of an excessive load part of a load applied to the propulsion assembly and exceeding a predetermined value by the excessive load part in at least part of a load transmission path among the mounting portion and the at least one propulsion unit via at least part of the servo actuator device.

12. The method according to claim 10 or 11, wherein the servo actuator device (4) is decoupled, preferably by a clutch, from the propulsion unit upon detecting a malfunction in the control by the servo actuator device (4).

13. The method according to any of the preceding claims, wherein the thrust force (F) is manipulated such that the position and/or orientation of the propulsion unit (2) is controlled to be a position and/or orientation at which a suction side of the propulsion unit (2) is located at least partially, preferably entirely, above an upper surface of the mounting portion.

14. A programme that, when running on a computer provided to an aerial vehicle, performs the method according to any of the preceding claims.

15. A control device having the programme of claim 14 stored thereon.
